# EUROPÄISCHE PATENTSCHRIFT

(11) **EP 0 436 942 B1**
(45) Veröffentlichungstag und Bekanntmachung des Hinweises auf die Patenterteilung: **24.11.1993**
(21) Anmeldenummer: 90125667.7
(22) Anmeldetag: 28.12.1990
(51) Int. Cl.: C01B 5/00, G21C 19/317, B01D 53/36

(54) **Vorrichtung zur Entfernung von Wasserstoff aus einem Wasserstoff, Sauerstoff, Dampf und Aerosole enthaltenden Gasgemisch**
Device for removing hydrogen from hydrogen, oxygen and aerosol containing gaseous mixture
Dispositif pour l'élimination de l'hydrogène d'un mélange gazeux contenant de l'hydrogène, de l'oxygène et de l'aérosol

(30) Priorität: 08.01.1990 DE 4000342; 08.02.1990 DE 4003833
(43) Veröffentlichungstag der Anmeldung: 17.07.1991
(73) Patentinhaber: Gesellschaft für Reaktorsicherheit (GRS) mbH, 50667 Köln (DE)
(72) Erfinder: Chakraborty, Amiya Kumar, Dr., W-5042 Erfstadt (DE)
(74) Vertreter: Hoffmann, Eckart, Dipl.-Ing.

(56) Entgegenhaltungen:
- EP-A- 0 301 536
- EP-A- 0 303 144

## Beschreibung

Die Erfindung betrifft eine Vorrichtung nach dem Oberbegriff des Patentanspruchs 1.

Eine solche Vorrichtung ist aus der DE-A-36 04 416 bekannt. Wie in dieser Druckschrift ausführlich dargelegt, tritt das Problem, Wasserstoff aus einem Gasgemisch zu beseitigen, insbesondere bei Kernreaktorunfällen auf, bei denen Wasserstoff in die sauerstoffhaltige Atmosphäre des Sicherheitsbehälters oder eines Druckabbausystems des Kernreaktors austritt und infolgedessen Explosionsgefahr besteht. Zur Beseitigung des Wasserstoffs macht die bekannte Vorrichtung von Metallen Gebrauch, die eine hohe Aufnahmefähigkeit für Wasserstoff, auch bei geringem Wasserstoffpartialdruck im Gasgemisch aufweisen. Zur Verhinderung einer Oxidation sind die Metalle mit einer wasserstoffdurchlässigen Schutzschicht überzogen. Dabei kann für die Schutzschicht ein Material verwendet werden, das als Katalysator für die Oxidation von Wasserstoff mit Sauerstoff zu Wasser wirkt.

Das wasserstoffaufnehmende Metall kann entweder selbsttragend oder als Schicht auf einer Trägeranordnung ausgebildet sein. Für Zwecke des Einsatzes als Sicherheitsvorrichtung, die nur im Störungsfall benötigt wird, ist bei der bekannten Vorrichtung vorgesehen, daß die mit der gegebenenfalls katalysierenden Schutzschicht versehene Trägeranordnung innerhalb eines geschlossenen Behälters untergebracht ist, der erst im Störungsfall, etwa druckabhängig, geöffnet wird. Bei einer Ausführungsform der bekannten Vorrichtung weist dieser Behälter an seinem oberen und seinem unteren Ende je eine Berstscheibe auf, die sich im Störungsfall ablösen. Innerhalb des Behälters befindet sich ein Paket aus den beschichteten, Wasserstoff aufnehmenden Metallen. Das umgebende Gasgemisch strömt nach Ablösen der Berstscheiben in den Behälter ein, wobei in dem Behälter eine konvektive Gasströmung vom Boden des Behälters zum Kopf entsteht.

Bei einer anderen Ausführungsform der bekannten Vorrichtung ist eine Folie aus dem beschichteten, Wasserstoff aufnehmenden Metall aufgerollt in einem Behälter angeordnet. Der Behälter ist an einer Decke aufgehängt und öffnet sich im Störungsfall, so daß die aufgerollte Folie abrollen kann und eine große Kontaktfläche mit dem Gasgemisch entsteht.

Eine ähnliche Vorrichtung ist aus der DE-A 37 25 290 bekannt. Diese Druckschrift offenbart ein als Katalysator besonders gut geeignetes Material, mit dem eine netz- oder blechartige Trägeranordnung ein- oder beidseitig beschichtet ist. Die beschichtete Trägeranordnung ist gefaltet oder aufgerollt in einem gasdichten Gehäuse enthalten, das sich erst im Störungsfall öffnet, so daß sich dann die Trägeranordnung entfalten oder abrollen kann. Die in dieser Druckschrift offenbarten Träger- und Katalysatormaterialien sind auch im Rahmen der vorliegenden Erfindung gut geeignet.

Während des Kernschmelzens in einem Reaktordruckbehälter (RDB) wird eine Temperaturerhöhung in der Schmelze bis 2400°C erreicht, wobei große Mengen an Spaltprodukten und Strukturmaterialien in die Atmosphäre des Sicherheitsbehälters freigesetzt werden. Es kommt dort zu einem Gemisch von Wasserdampf und Gasen, in dem Aerosolpartikel mit einer Massenkonzentration von bis zu 20 g/m³ suspendiert sein können. So können sich zum Beispiel im Niederdruck-Pfad zu Beginn der Schmelz-Beton-Wechselwirkung 1 bis 3 t dispergierter Masse luftgetragen im SB befinden. Der bei weitem größte Massenanteil, mehr als 95%, ist nicht radioaktiv. Doch ist der größte Anteil der radioaktiven Substanzen an Aerosolpartikel gebunden. Die eingangs erwähnte Freisetzung von Wasserstoff bei Reaktorunfällen fällt zeitlich mit der vorgenannten Freisetzung von Aerosolen zusammen.

Modelluntersuchungen haben gezeigt, daß die Freisetzungen des Dampfes praktisch mit dem Beginn eines Kernschmelzunfalls einsetzt, während diejenige des Wasserstoffs und gleichzeitig damit die Freisetzung von Aerosolen erst mit einer gewissen Verzögerung auftreten. Bei Vorhandensein großer Dampfmengen und starker Strömung verläuft die katalytische Reaktion langsamer. Die Reaktionsgeschwindigkeit nimmt exponentiell mit der Temperatur zu. Erst bei einer ausreichend hohen Temperatur an der Oberfläche der Katalysatoranordnung ergibt sich eine ausreichende Konvektionsströmung, um zu verhindern, daß sich die im Gasgemisch enthaltenen Aerosolteilchen an der Katalysatoroberfläche absetzen. Dies wird durch die bei entsprechend hoher Temperatur und Umwandlungsrate ständige Ausbildung von Dampf an der Oberfläche der Katalysatoranordnung unterstützt. Solange jedoch in der Anfangsphase die Temperatur der Katalysatoranordnung noch nicht ausreichend hoch ist, können sich Aerosolteilchen und im Dampf enthaltene Fetteilchen an der Oberfläche absetzen, damit die effektive Katalysatoroberfläche verringern und die Katalysatorwirkung wesentlich beeinträchtigen.

Aufgabe der Erfindung ist es, eine Vorrichtung der eingangs angegebenen Art so auszugestalten, daß eine Ablagerung von Aerosolteilchen und im Dampf enthaltenen Fetteilchen an der Oberfläche der Katalysatoranordnung weitgehend verhindert wird und die zur Erzielung einer hohen Reaktionsgeschwindigkeit erforderliche Temperatur rasch erreicht wird.

Diese Aufgabe wird erfindungsgemäß durch die kennzeichnenden Merkmale des Patentanspruchs 1 gelöst.

Vorteilhafte Weiterbildungen der Erfindung sind in den Unteransprüchen gekennzeichnet.

Die gemäß dieser Lösung vorgesehene Schutzvorrichtung bremst in einer Anfangsphase der Katalysatorreaktion den freien Zutritt von Aerosolen an die Oberfläche der Katalysatoranordnung. Die Schutzvorrichtung bildet einen Raum, der die Katalysatoranordnung aufnimmt und mit der die Schutzvorrichtung umgebenden Atmosphäre derart in Verbindung steht, daß innerhalb der Schutzvorrichtung ausreichend Wasserstoff und Sauerstoff zur Reaktion zur Verfügung stehen, sich jedoch keine zu starke, zu einer entsprechend großen Wärmeabfuhr führende Strömung einstellt und ferner die Aerosolteilchen weitgehend an einem Eintreten in den Raum innerhalb der Schutzvorrichtung gehindert werden. Ist auf diese Weise in relativ kurzer Zeit eine ausreichende Temperatur von etwa 100° C erreicht, bei der eine sogenannte selbsttragende, beschleunigte Katalysationsreaktion vorliegt, dann öffnet sich die Schutzvorrichtung selbsttätig, so daß die Katalysatoranordnung nunmehr voll dem Gasgemisch ausgesetzt wird, dem der Wasserstoff entzogen werden soll.

Spezielle Ausführungsbeispiele der Erfindung werden nachfolgend anhang der schematischen Zeichnungen näher erläutert. Es zeigen:
- Fig. 1A: eine erste Ausführungsform der Erfindung in einem geschlossenen Zustand vor Erreichen einer vorgegebenen Temperatur,
- Fig. 1B: eine Schnittansicht der Anordnung von Fig. 1A längs der Linie A-A,
- Fig. 1C: in vergrößerter Darstellung einen Teil der Fig. 1B zur Verdeutlichung der Ausbildung der Löcher,
- Fig. 2A: eine Draufsicht auf die Anordnung von Fig. 1A im aufgeklappten Zustand,
- Fig. 2B: eine Schnittansicht längs der Linie B-B in Fig. 2A,
- Fig. 3A: eine zweite Ausführungsform der Erfindung im geschlossenen Zustand,
- Fig. 3B: eine Schnittansicht der Erfindung senkrecht zur Bildebene in Fig. 3A,
- Fig. 3C: eine Seitenansicht der zweiten Ausführungsform im aufgeklappten Zustand,
- Fig. 4A: eine dritte Ausführungsform der Erfindung im geschlossenen Zustand,
- Fig. 4B: eine Teilschnittansicht der Anordnung von Fig. 4A,
- Fig. 4C: in vergrößerter Darstellung einen Teil einer Abdeckplatte von Fig. 4A, und
- Fig. 5: schematisch in vergrößerter Darstellung ein Beispiel einer Halteeinrichtung.

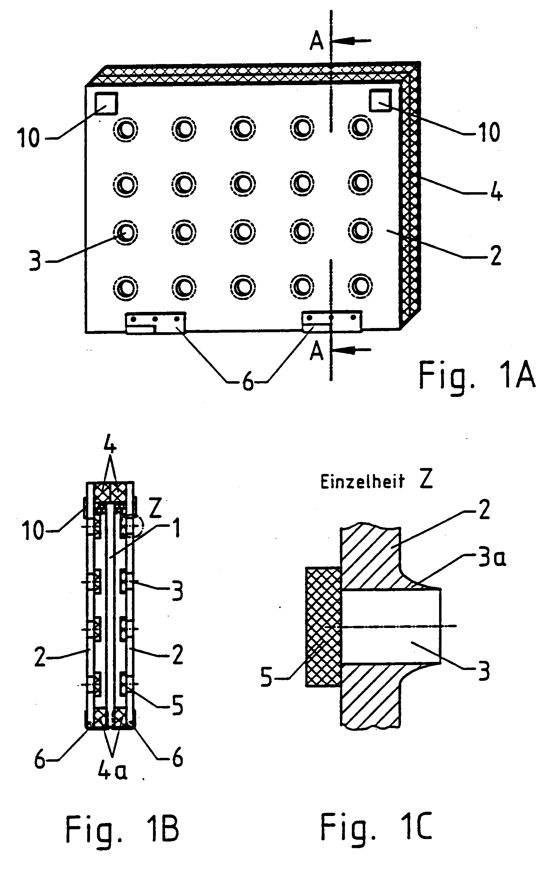

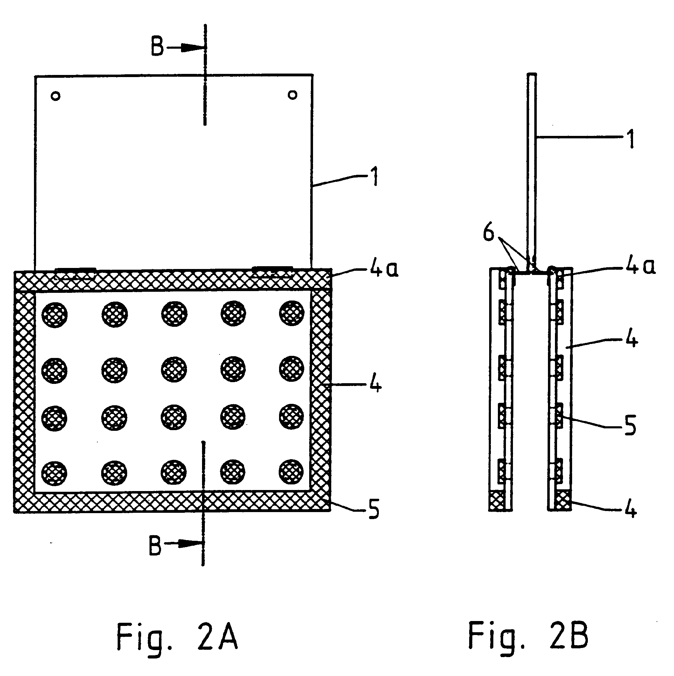

Die Fig. 1 und 2 zeigen eine erste Ausführungsform der Erfindung, bei der an der Unterseite einer Katalysatorplatte 1 zwei Abdeckplatten 2 mittels Scharnieren 6 so angelenkt sind, daß sie aus der geschlossenen Stellung gemäß Fig. 1 in die geöffnete Stellung gemäß Fig. 2 aufgeklappt werden können. Im Ausgangszustand ist die Vorrichtung gemäß Fig. 1A und 1B geschlossen, wobei die beiden Abdeckplatten 2 mittels Halteeinrichtung 10, die sich bei Erreichen einer vorgegebenen Temperatur lösen, in der geschlossenen Stellung gehalten werden. Sobald sich diese Halteeinrichtungen bei Erreichen der vorgegebenen Temperatur lösen, sorgen Vorspannungsmittel dafür, daß die Abdeckplatten 2 in die aus den Fig. 2A und 2B ersichtliche Stellung umklappen.

In der geschlossenen Stellung liegen die beiden Abdeckplatten 2 auf beiden Seiten parallel zur Katalysatorplatte 1. Der Abstand zwischen der Katalysatorplatte einerseits und den beiden Abdeckplatten andererseits wird durch die Länge der Schenkel 6a der Scharniere 6 und durch Randfilter 4, 4a bestimmt. Bei der dargestellten Ausführungsform (siehe Fig. 1B und 2A) sind die Abmessungen der Katalysatorplatte 1 etwas geringer (z.B. 1 bis 2 cm) als die der beiden Abdeckplatten 2 derart, daß der obere Rand und die beiden Seitenränder (bezogen auf die Fig.) der Katalysatorplatte 1 von innen gegen Randfilter 4 stoßen, die zwischen den Abdeckplatten 2 angeordnet sind. Im Bereich der Unterseite der Katalysatorplatte 1, wo die Scharniere 6 befestigt sind, sind Randfilter 4a je zwischen einer Abdeckplatte und der Katalysatorplatte vorgesehen, deren Dicke um die halbe Dicke der Katalysatorplatte 1 geringer als die der Randfilter 4 ist. Die Abdeckplatten 2 weisen vorzugsweise eine Dicke im Bereich von 0,1 bis 1 mm auf und können aus Aluminium, Kupfer, deren Legierungen oder, vorzugsweise, aus einem austenitischen Stahl bestehen, dessen Vorteil ist, daß er nicht oxidiert. Die Abdeckplatten 2 sind mit Stanzlöchern 3 versehen, die auf der jeweiligen Außenseite der Abdeckplatten mit einem wulstförmigen Stanzgrat 3a versehen sind. Bei den Löchern kann es sich um kreisrunde Löcher, um Langlöcher oder um Schlitze handeln. Auf der Innenseite der Abdeckplatten 2 sind diese Löcher 3 mittels einer jeweiligen Filterscheibe 5 verdeckt, die, ebenso wie die Randfilter 4, 4a, hitzebeständig an der jeweiligen Abdeckplatte 2 befestigt sind. Der Raum zwischen den beiden Abdeckplatten 2 steht über die Löcher 3 und am umlaufenden Rand über die jeweiligen Filter mit der Außenseite in Verbindung. Bei den Randfiltern 4, 4a und den Filterscheiben 5 handelt es sich um das gleiche nicht brennbare Filtermaterial. Insbesondere kommen dafür sogenannte HEPA (High Efficiency Particulate Air) Filter in Betracht. Diese Filter zeichnen sich durch einen besonders großen Abscheidegrad für Aerosole aus und besitzen gleichzeitig eine große Durchlässigkeit für die durch Unterstützung der Katalysatorplatte miteinander zu reagierenden Gase. Da diese Filter jedoch eine relativ geringe Abstoßkraft gegenüber Wasser und Dampf aufweisen, werden sie vorzugsweise mit Vorfiltern kombiniert, die eine große Gasdurchlässigkeit für die zu reagierenden Gase mit einer guten Abstoßkraft gegen Dampf vereinen. Diese Vorfilter, für die sich beispielsweise solche unter der Bezeichnung ULPA im Handel befindliche Filter eignen, müssen im Fall solcher kombinierter Filter jeweils der Außenseite zugewandt sein. In Gasströmungsrichtung ist für jede diese beiden Filterarten eine Stärke von etwa 0,5 mm erforderlich, so daß sich bei kombinierten Filtern eine Gesamtstärke von etwa 1 mm ergibt. Da der in dem Gasgemisch enthaltene Wasserdampf stark ionisiert ist und dadurch sehr aggressiv ist, ist es vorteilhaft, das verwendete Filtermaterial mit einem Ionenaustauscher zu imprägnieren, um so die Aggressivität des Dampfes zu verringern. Die Filter müssen dann in einem trockenen Zustand montiert werden.

In der in den Fig. 1A und 1B gezeigten geschlossenen Stellung der Vorrichtung dringt durch die Löcher 3 und die Filterscheiben 5 sowie durch die Randfilter 4, 4a das Gasgemisch aus Wasserstoff, Luft und Dampfresten in den die Katalysatorplatte 1 zwischen den Abdeckplatten 2 aufnehmenden Raum ein, so daß es zur Reaktion an der Katalysatoroberfläche kommt. Zur Erhöhung der Katalysatoroberfläche können auch die Innenseiten der Abdeckplatten 2 mit dem Katalysatormaterial beschichtet sein. Kondensat, das sich an den Außenseiten der Abdeckplatten 2 bildet, wird durch die wulstartigen Stanzgrate 3a um die Löcher 3 herumgeleitet und kann deshalb nicht in den Raum zwischen den Abdeckplatten 2 eintreten. Die in der umgebenden Atmosphäre enthaltenen Aerosole setzen sich an der Außenfläche der Abdeckplatten ab, bzw. werden durch die Filterwirkung der Filter 4, 4a, 5 an einem Eintritt in den Raum zwischen den Abdeckplatten gehindert. Deshalb steht im geschlossenen Zustand der Vorrichtung auch bei einer außerhalb der Vorrichtung hohen Aerosoldichte ausreichend Katalysatoroberfläche für die miteinander zur Reaktion zu bringenden Gase zur Verfügung. Bei dieser Reaktion tritt eine Erwärmung des Gasgemisches und damit eine Konvektionsströmung ein, aufgrund derer kühleres Gasgemisch durch die unteren Löcher in das Innere der Vorrichtung in Kontakt mit der Katalysatoroberfläche gesogen wird, während das bereits erwärmte und reagierte Gasgemisch aus den höher gelegenen Löchern nach außen drängt. Die Abdeckplatten schützen die Katalysatoranordnung vor einer starken Wärmeabgabe an den außerhalb befindlichen Dampf. Dadurch kommt es zu einer raschen Temperaturerhöhung innerhalb der Vorrichtung verbunden mit einer immer höheren Katalysationsgeschwindigkeit. Aufgrund der raschen Temperaturerhöhung kommt der sich innerhalb des Raums zwischen den Abdeckplatten 2 befindende oder bildende Dampf rasch in einen überhitzten Zustand, in dem er reaktionsträger ist und die Katalysationswirkung des Katalysatormaterials kaum beeinträchtigt. Aufgrund der beschleunigten Reaktion verbunden mit der Temperaturerhöhung der Katalysatorplatte wird immer mehr Wasserstoff des eindringenden Gasgemisches oxidiert.

Wenn bei Erreichen einer vorgegebenen Temperatur eine ausreichend hohe Konvektionsströmung längs den Katalysatorflächen gewährleistet ist, bei der sich kaum noch Aerosolteilchen auf den Katalysatorflächen absetzen können, öffnen sich die Halteeinrichtungen 10, so daß die Vorrichtung aus der geschlossenen Stellung gemäß Fig. 1A und 1B in die geöffnete Stellung der Fig. 2A und 2B überführt wird.

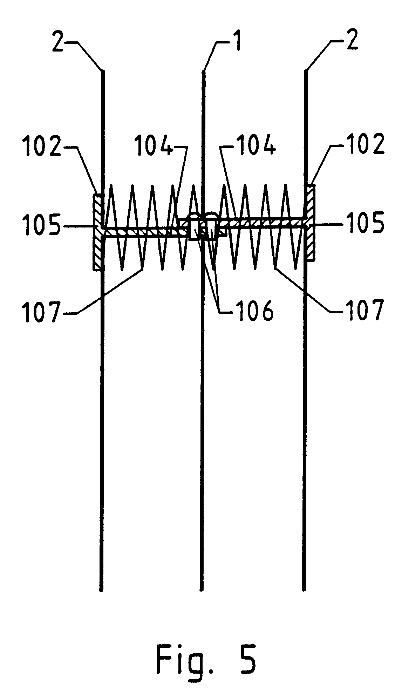

Die Halteeinrichtungen 10 können gemäß schematischer Darstellung in Fig. 5 aufgebaut sein. Jede Halteeinrichtung enthält zwei T-Stücke 102, die mit ihren langen Schenkeln 104 je von außen so durch eine Abdeckplatte 2 und die Katalysatorplatte 1 gesteckt sind, daß der Querschenkel 105 des T an der Außenfläche der jeweiligen Abdeckplatte 2 anliegt. Zu beiden Seiten der Katalysatorplatte 1 sind die gegeneinander gesteckten langen Schenkel 104 mittels Bolzen oder Nieten, die bei Erreichen der vorgegebenen Temperatur schmelzen, miteinander verbunden. Dafür sind in den langen Schenkeln entsprechende Bohrungen vorgesehen, wie übrigens auch die Abdeckplatten und die Katalysatorplatte Bohrungen zum Durchstecken der T-Stücke aufweisen müssen. Auf dem langen Schenkel 104 jedes der T-Stücke 102 befindet sich eine gespannte Druckfeder 107, die sich einerseits an der Katalysatorplatte und andererseits an der Innenfläche der entsprechenden Abdeckplatte abstützt. Sobald die Nieten 106 schmelzen und damit die T-Stücke freigeben, drücken die Druckfedern 107 die beiden Abdeckplatten von der Katalysatorplatte weg, so daß die Vorrichtung in die in den Fig. 2A und 2B gezeigte Stellung gelangt. Es sei betont, daß es sich bei der beschriebenen Halteeinrichtung lediglich um ein Beispiel handelt.

Wenn nach Lösen der Halteeinrichtungen 10 die Abdeckplatten 2 in die in den Fig. 2A und 2B gezeigte Stellung umgeklappt sind, sind die Katalysatorflächen, das heißt insbesondere die Oberfläche der Katalysatorplatte 1 sowie gegebenenfalls die Innenflächen der Abdeckplatten 2 dem Gasgemisch der umgebenden Atmosphäre voll ausgesetzt, um nun ihre Funktion ohne weitere Strömungsbegrenzung erfüllen zu können.

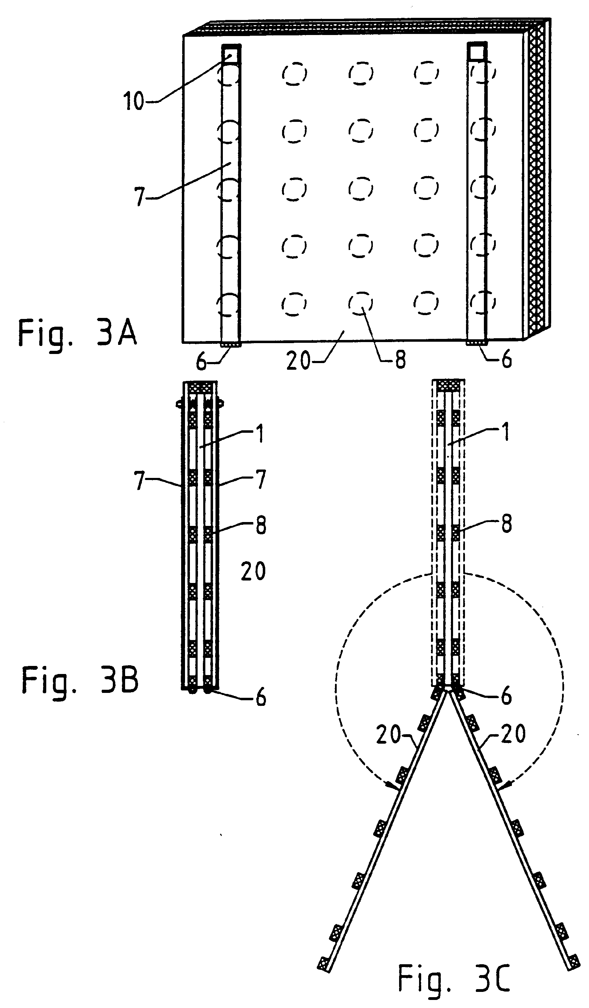

Die Fig. 3A, 3B und 3C zeigen eine zweite, vereinfachte Ausführungsform der Erfindung. Die Fig. 3A und 3B zeigen den geschlossenen, Fig. 3C den offenen Zustand.

Wie die erste Ausführungsform, so enthält auch die zweite als Grundbestandteil eine Katalysatorplatte 1. Anstelle der metallischen Abdeckplatten 2 der ersten Ausführungsform sind jedoch in diesem Fall zwei Abdeckplatten 20 aus dem Filtermaterial vorgesehen. Dabei handelt es sich wie bei den Filtern der ersten Ausführungsform vorzugsweise bei jeder der Abdeckplatten 20 um zwei Filterschichten mit einem äußeren Dampffilter und einem inneren Aerosolfilter. Die Dicke der Abdeckplatten 20 beträgt etwa 1 mm. Anstelle der bisher erwähnte Filtermaterialien können die Abdeckplatten 2 auch aus nicht brennbaren Teflonplatten (Polytetrafluoräthylenplatten) bestehen, die eine ähnliche Filterwirkung aufweisen.

Die Abdeckplatten 20 sind gemäß Darstellung in den Figuren hitzebeständig an Metallbändern 7, die etwa aus Kupfer oder Messing bestehen, befestigt. Die Metallbänder 7 sind mittels Scharnieren 6 an der Unterseite (bezogen auf die Darstellung) der Katalysatorplatte 1 angelenkt. Nahe ihrem oberen Ende sind die Metallbänder 7 durch Halteeinrichtungen 10 miteinander verbunden, die grundsätzlich in gleicher Weise wie die entsprechenden Halteeinrichtungen 10 der ersten Ausführungsform ausgeführt sein können und sich bei Erreichen einer vorgegebenen Temperatur lösen, so daß die Abdeckplatten 20 aus der geschlossenen in die offene Stellung umklappen.

Bei der zweiten Ausführungsform sind in gleicher Weise wie bei der ersten Ausführungsform die Randfilter 4, 4a vorgesehen. Da in diesem Fall jedoch die Abdeckplatten 20 selbst aus dem Filtermaterial bestehen, entfallen bei der zweiten Ausführungsform die Löcher 3 der ersten Ausführungsform. Abstandshalter 8 sind wie die Randfilter 4, 4a hitzebeständig an den Abdeckplatten 20 befestigt und weisen im wesentlichen die gleiche Stärke wie die Randfilter 4 auf, um einen vorgegebenen Abstand zwischen den Abdeckplatten 20 und der Katalysatorplatte 1 in der geschlossenen Stellung der Vorrichtung aufrechtzuerhalten. Dies ist zweckmäßig, weil die dünnen, aus Filtermaterial bestehenden Abdeckplatten 20 keine große Steifigkeit aufweisen, so daß ohne die Abstandshalter der erforderliche Raum zwischen den Abdeckplatten in der geschlossenen Stellung möglicherweise nicht aufrechterhalten werden könnte. Diese Abstandshalter 8 bestehen vorzugsweise aus Filtermaterial, um gasdurchlässig zu sein und die Konvektionsströmung längs der Katalysatorplatte möglichst wenig zu behindern.

Die Funktionsweise der zweiten Ausführungsform entspricht im wesentlichen derjenigen der ersten. Durch die Randfilter 4, 4a und ganzflächig durch die Abdeckplatten 20 treten Bestandteile des in der äußeren Umgebung enthaltenden Gasgemisches im geschlossenen Zustand der Vorrichtung in den Raum zwischen den Abdeckplatten ein. Aerosole, die sich in einer Anfangsphase eines Störfalles an den Katalysatorflächen absetzen könnten, sowie Wasser und Wasserdampf werden aufgrund der Filterwirkung der Abdeckplatten 20 im wesentlichen von der Atmosphäre innerhalb der Abdeckplatten ferngehalten. Es kommt, wie bei der ersten Ausführungsform, zur Reaktion innerhalb der Abdeckplatten verbunden mit einer Erwärmung und schließlich dem Öffnen der Halteeinrichtungen 10 und damit der Metallbänder 7. Daraufhin klappen die Abdeckplatten 20, die ihre Aufgabe nunmehr erfüllt haben, gemäß Darstellung in Fig. 3C nach unten, so daß die Katalysatorplatte 1 dem zu behandelnden Gasgemisch voll ausgesetzt ist und ihre Funktion erfüllen kann.

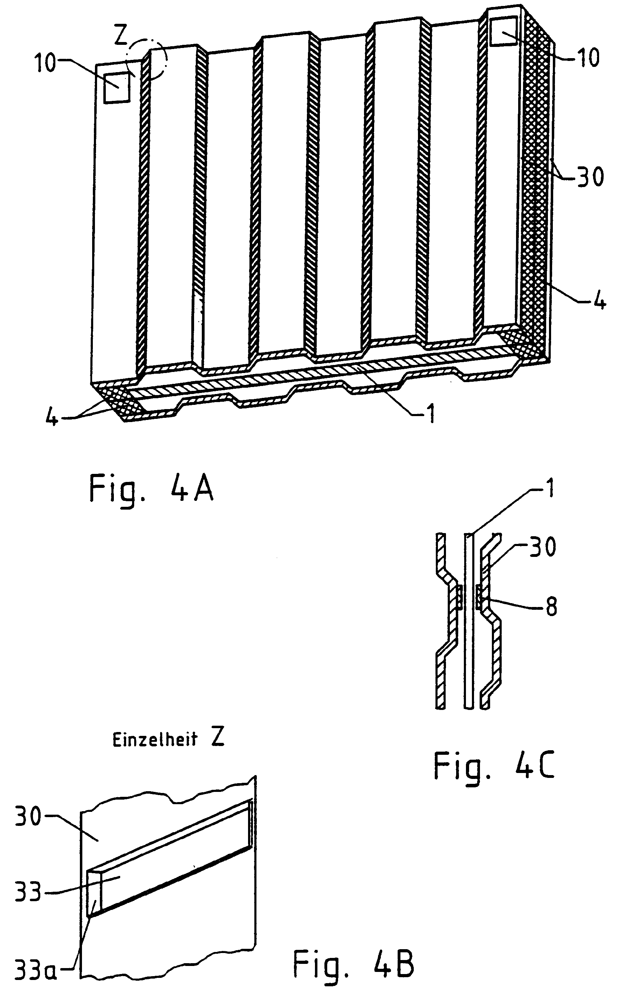

Die Fig. 4A, 4B und 4C zeigen eine dritte Ausführungsform der Erfindung. Bei dieser dritten Ausführungsform werden wieder metallische Abdeckplatten aus Aluminium, Kupfer, deren Legierungen, vorzugsweise aber aus einem austenitischen Stahl verwendet. Im Unterschied zur ersten Ausführungsform sind die Abdeckplatten 30 in diesem Fall wellenförmig ausgebildet. Fig. 4A zeigt nur den oberen Teil der Vorrichtung. Die Anlenkung der Abdeckplatten 30 entspricht derjenigen der ersten Ausführungsform und ist nicht dargestellt.

Wie aus Fig. 4A gut erkennbar, sind die Abdeckplatten 30 an den senkrecht verlaufenden Stufen, die jeweils Berg und Tal der Wellenform verbinden, mit eingestanzten Schlitzen 33 versehen, die bei dieser Ausführungsform die Funktion der Löcher 3 der ersten Ausführungsform übernehmen. Die Schlitze sind im wesentlichen parallel zueinander in einer Reihe längs der jeweiligen Stufe angeordnet. Gemäß Darstellung in Fig. 4B sind die Schlitze so gestanzt, daß sie jeweils auf der Außenseite der Abdeckplatten 30 von einem Stanzgrat 33a umgeben sind, deren Funktion der der entsprechenden Grate der ersten Ausführungsform entspricht. Ergibt sich in einem Störungsfall eine Gasgemischströmung in Richtung des Wellenverlaufs der Abdeckplatten 30, also senkrecht zu ihren Schlitzreihen, dann läßt diese Gestaltung der Abdeckplatten erheblich mehr Gasgemisch für die katalytische Reaktion in die Vorrichtung eintreten. Außerdem ergibt sich allein durch die Wellenform der Abdeckplatten 30 ein größeres Volumen an Gasgemisch innerhalb der Abdeckplatten, solange sich die Vorrichtung im geschlossenen Zustand befindet. An der Innenseite sind die Schlitze mit Filterstreifen, die in den Figuren nicht dargestellt sind, in gleicher Weise abgedeckt, wie dies bei den Löchern 3 der ersten Ausführungsform der Fall ist. Nur durch die Randfilter 4 bzw. 4a (in den Fig. 4A bis 4C nicht dargestellt) und durch die auf der Innenseite der Schlitze 33 angeordneten Filter kann daher während des geschlossenen Zustands der Vorrichtung das Gasgemisch in den Innenraum zur Reaktion an den Katalysatorflächen eintreten.

Es bedarf keiner weiteren Erwähnung, daß wie bei der ersten Ausführungsform auch die Abdeckplatten 30 der dritten Ausführungsform auf ihrer Innenseite mit Katalysatormaterial beschichtet sein können.

Wenn die Wellen der beiden Abdeckplatten 30 geeignet gegeneinander versetzt sind, können sie in der geöffneten Stellung der Vorrichtung ineinander greifen, so daß die geöffnete Vorrichtung kompakter wird.

Im Bedarfsfall können Abstandshalter 8 gemäß Darstellung in Fig. 4C zwischen den Abdeckplatten 30 und der Katalysatorplatte 1 angeordnet werden. Diese Abstandshalter bestehen vorzugsweise aus Filtermaterial, um gasdurchlässig zu sein und die Konvektionsströmung längs der Katalysatorplatte möglichst wenig zu behindern.

Auch bei der dritten Ausführungsform wird die Vorrichtung mittels Halteeinrichtungen 10 im geschlossenen Zustand gehalten, die sich bei Erreichen einer vorgegebenen Temperatur öffnen und das Aufklappen der Abdeckplatten 30 bewirken.

Je nach Unfallsequenz kann die Freisetzung von Dampf und Wasserstoff in einem Raum stoßweise erfolgen. Zwischen zwei aufeinanderfolgenden Freisetzungen können mehrere Stunden liegen. Während dieser Zeit können die Katalysatorplatten der geöffneten Vorrichtungen abkühlen und bei der nächsten Freisetzung längere Zeit benötigen, bis sie wieder die erforderliche Temperatur erreicht haben. Es ist deshalb zweckmäßig, innerhalb eines zu schützenden Raumes mehrere der erfindungsgemäßen Vorrichtungen anzuordnen, die sich aufgrund entsprechend unterschiedlicher Auslegung ihrer Halteeinrichtungen 10 bei unterschiedlichen Temperaturen öffnen. Beispielsweise könnten drei gesonderte Vorrichtungen mit Ansprechtemperaturen von 117°, 145° bzw. 180° vorgesehen werden. Die Vorrichtung mit der niedrigsten Ansprechtemperatur wird sich bei der ersten Freisetzung von Dampf und Wasserstoff öffnen und ihre Funktion erfüllen. Man kann davon ausgehen, daß nachfolgende Freisetzungen volumenmäßig größer sind und zu höheren Temperaturen führen, bei denen dann entsprechend die weiteren Vorrichtungen stufenweise geöffnet und jeweils solange durch die Abdeckplatten funktionsfähig gehalten werden, bis die jeweilige Ansprechtemperatur erreicht ist.

Die erfindungsgemäß vorgesehene Schutzvorrichtung schützt die Katalysatoranordnung bis zu dem Anfang einer sogenannten selbsttragenden, beschleunigten katalytischen Reaktion vor Ablagerungen und stellt nach Erreichen einer vorgegebenen Temperatur eine große Katalysatoroberfläche für die weitere Reaktion zur Verfügung. Solange sich die Vorrichtung im geschlossenen Zustand befindet, tritt auch bei großer Strömung außerhalb der Vorrichtung nur ein geringer Verlust der durch die Katalysatorwirkung entstehenden Wärme auf, so daß die Temperatur der Katalysatoranordnung rasch ansteigt. Aufgrund der durch die Dichte des Filtermaterials, durch seine Dicke und/oder durch die Anzahl und Größe der Löcher festgelegten Begrenzung der Zufuhr des Gasgemisches an die Katalysatoroberfläche schützt die Vorrichtung auch vor einer übermäßigen Wärmeabfuhr an den in der Atmosphäre enthaltenen Dampf. Die Schutzvorrichtung hat den weiteren Vorteil, daß die Katalysatoranordnung, solange noch gar kein Störfall eingetreten ist, vor einer Verschmutzung mit Öl, Fett, Schwefel und anderer in der Luft enthaltener Kontamination bewahrt wird und damit ihre Funktionsfähigkeit über eine lange Zeit erhält.

Bei den beschriebenen Ausführungsbeispielen ist von einer Katalysatorplatte die Rede gewesen, deren Oberflächen mit dem Katalysatormaterial beschichtet sind. Die Katalysatorplatte kann stattdessen auch aus zwei Netzschichten bestehen, zwischen denen das Katalysatormaterial z. B. in Form eines Granulats oder Schwammseingeschlossen ist. Auf diese Weise läßt sich mit einer plattenartigen Anordnung, die sich in der Form nicht wesentlich von einer oberflächenbeschichteten Katalysatorplatte unterscheidet, eine sehr große Katalysatoroberfläche erzielen. Das Netz besteht bei einer derartigen Katalysatorplatte vorzugsweise aus rostfreiem Stahl.

## Patentansprüche

1. Vorrichtung zur Entfernung von Wasserstoff aus einem Wasserstoff, Sauerstoff, Dampf und Aerosole enthaltenden Gasgemisch mit einer Katalysatoranordnung (1) aus einem Trägermaterial, das mit einem die Oxidation von Wasserstoff unter Freisetzung von Wärme katalysierenden Material beschichtet ist,
**gekennzeichnet** durch eine mit der Katalysatoranordnung verbundene, gasdurchlässige, für Aerosole im wesentlichen undurchlässige Schutzvorrichtung (2, 4, 4a, 5), die die Katalysatoranordnung (1) bis zum Erreichen einer vorgegebenen Temperatur einschließt und bei Erreichen der vorgegebenen Temperatur selbsttätig in eine die Katalysatoranordnung freigebende Stellung bewegbar ist.

2. Vorrichtung nach Anspruch 1, bei der die Katalysatoranordnung in Form einer Katalysatorplatte oder in einen Netz eingeschlossenes Katalysatorgranulat bzw. -schwamm ausgebildet ist, dadurch **gekennzeichnet,** daß die Schutzvorrichtung zwei eine Filtereigenschaft aufweisenden Abdeckplatten (2, 20, 30) umfaßt, die im Bereich eines Seitenrandes an der Katalysatorplatte (1) angelenkt und zwischen einer ersten Stellung, in der sie die Katalysatorplatte (1) jeweils mit einem Abstand sandwichartig einschließen, und einer zweiten Stellung, in der sie von der Katalysatorplatte weggeklappt sind, verschwenkbar sind.

3. Vorrichtung nach Anspruch 2, dadurch **gekennzeichnet,** daß die Abdeckplatten (20) selbst aus einem gasdurchlässigen, für Aerosole, Fett und, vorzugsweise, auch für Dampf im wesentlichen undurchlässigen Filtermaterial bestehen.

4. Vorrichtung nach Anspruch 2, dadurch **gekennzeichnet,** daß die Abdeckplatten (2) Löcher (3) sowie auf ihrer in der ersten Stellung der Katalysatorplatte (1) zugewandten Innenseite die Löcher (3) abdeckende Filterelemente (5) aus einem gasdurchlässigen, für Aerosole und, vorzugsweise, auch für Dampf im wesentlichen undurchlassigen Filtermaterial aufweisen.

5. Vorrichtung nach Anspruch 4, dadurch **gekennzeichnet,** daß es sich bei den Löchern (3) um runde oder schlitzartige Stanzlöcher handelt, die auf der Außenseite der Abdeckplatten (2) von einem wulstartigen Stanzgrat (3a) umgeben sind.

6. Vorrichtung nach einem der Ansprüche 3 bis 5, dadurch **gekennzeichnet,** daß die Abdeckplatten (30) im Querschnitt wellenförmig ausgebildet sind, und Reihen schlitzartiger Löcher (33) aufweisen.

7. Vorrichtung nach einem der Ansprüche 2 bis 6, dadurch **gekennzeichnet,** daß ein ringartig umlaufendes Filterelement (4, 4a) aus einem gasdurchlässigen, für Aerosole und, vorzugsweise, auch für Dampf im wesentlichen undurchlässigen Filtermaterial vorgesehen ist, das in der ersten Stellung der Abdeckplatten (2, 20, 30) den Rand gegenüber dem freien Durchtritt des umgebenden Gasgemisches abschließt.

8. Vorrichtung nach einem der Ansprüche 3 bis 7, dadurch **gekennzeichnet,** daß die Filterelemente (4, 4a, 5) aus zwei Schichten gasdurchlässiger Filtermaterialien zusammengesetzt sind, von denen das eine im wesentlichen undurchlässig für Aerosole und das andere dampfabweisend ist.

9. Vorrichtung nach einem der Ansprüche 2 bis 8, dadurch **gekennzeichnet,** daß die Abdeckplatten (2, 20, 30) an ihrer den Anlenkpunkten an der Katalysatorplatte (1) gegenüberliegenden Seite mittels einer sich bei der vorgegebenen Temperatur öffnenden Halteeinrichtung (10) verbunden sind, die zwischen den Abdeckplatten (2) bzw. zwischen jeder Abdeckplatte (2) und der Katalysatorplatte (1) Vorspannmittel (107) aufweist, durch die die Abdeckplatten (2) beim Öffnen in die zweite Stellung verschwenkt werden.

10. Vorrichtung nach Anspruch 6, dadurch **gekennzeichnet,** daß die Wellen der beiden Abdeckplatten (30) gegeneinander im wesentlichen um die halbe Wellenperiode versetzt sind.

11. Vorrichtung nach einem der Ansprüche 2 bis 10, dadurch **gekennzeichnet,** das das Filtermaterial mit einem Ionenaustauscherharz imprägniert ist.

## Claims

1. Apparatus for the removal of hydrogen from a gas mixture containing hydrogen, oxygen, vapour and aerosols, with a catalyst arrangement (1) comprising a carrier material which is coated with a material for catalysing the oxidation of hydrogen, with the production of heat, characterised by a protective assembly (2, 4, 4a, 5) which is connected to the catalyst arrangement and which is gas-permeable and which is substantially impermeable to aerosols and which encloses the catalyst arrangement (1) until a predetermined temperature is reached and which when the predetermined temperature is reached is automatically movable into a position of freeing the catalyst arrangement.

2. Apparatus according to claim 1 in which the catalyst arrangement is in the form of a catalyst plate or catalyst sponge or granulate which is enclosed in a mesh characterised in that the protective assembly includes two cover plates (2, 20, 30) which have a filter property and which are pivotally mounted in the region of a side edge to the catalyst plate (1) and are pivotable between a first position in which they sandwich-like enclose the catalyst plate (1) at a respective spacing therefrom and a second position in which they are pivoted away from the catalyst plate.

3. Apparatus according to claim 2 characterised in that the cover plates (20) themselves comprise a filter material which is gas-permeable and which is substantially impermeable to aerosols, grease and preferably also vapour.

4. Apparatus according to claim 2 characterised in that the cover plates (2) have holes (3) and on their inside which is towards the catalyst plate (1) in the first position filter elements (5) which cover the holes (3) and which comprise a filter material that is gas-permeable and substantially impermeable to aerosols and preferably also vapour.

5. Apparatus according to claim 4 characterised in that the holes (3) are round or slit-like punched holes which are surrounded on the outside of the cover plates (2) by a bead-like punching burr (3a).

6. Apparatus according to one of claims 3 to 5 characterised in that the cover plates (30) are of a corrugated configuration in cross-section and have rows of slit-like holes (33).

7. Apparatus according to one of claims 2 to 6 characterised in that there is provided a filter element (4, 4a) which extends ring-like around the assembly and ccmprises a filter material that is gas-permeable and substantially impermeable to aerosols and preferably also vapour, which in the first position of the cover plates (2, 20, 30) closes off the edge in relation to a free flow therethrough of the surrounding gas mixture.

8. Apparatus according to one of claims 3 to 7 characterised in that the filter elements (4, 4a, 5) are composed of two layers of gas-permeable filter materials of which one is substantially impermeable to aerosols and the other is vapour-repellent.

9. Apparatus according to one of claims 2 to 8 characterised in that at their side opposite the pivotal mounting points to the catalyst plate (1) the cover plates (2, 20, 30) are connected by means of a holding device (10) which opens at the predetermined temperature and which has between the cover plates (2) or between each cover plate (2) and the catalyst plate (1) biasing means (107) by which the cover plates (2), in the opening phase, are pivoted into the second position.

10. Apparatus according to claim 6 characterised in that the corrugations of the two cover plates (30) are displaced relative to each other substantially by half the corrugation period.

11. Apparatus according to one of claims 2 to 10 characterised in that the filter material is impregnated with an ion exchanger resin.

## Revendications

1. Dispositif pour l'élimination de l'hydrogène d'un mélange gazeux contenant de l'hydrogène, de l'oxygène, de la vapeur et des aérosols, comportant un agencement de catalyseur (1) à base d'un support enduit avec un matériau catalysant l'oxydation de l'hydrogène avec dégagement de chaleur,
**caractérisé** par un dispositif de protection (2,4,4a,5) relié à l'agencement de catalyseur, perméable aux gaz, essentiellement imperméable aux aérosols, dispositif de protection qui enferme l'agencement de catalyseur(l) jusqu'à l'obtention d'une température prédéterminée et qui, la température prédéterminée atteinte, peut se mettre automatiquement dans une position libérant l'agencement catalyseur.

2. Dispositif selon la revendication 1, dans lequel l'agencement de catalyseur a la forme d'une plaque ou d'un granulat ou d'une éponge enfermée dans un maillage,
**caractérisé** en ce que le dispositif de protection comporte deux plaques de couverture (2,20,30) présentant une propriété filtrante, qui sont articulées sur la plaque de catalyseur (1) dans la zone d'un bord latéral et sont déplaçables entre une première position, dans laquelle, à la manière d'un sandwich, elles enferment, à distance respective, la plaque de catalyseur (1) et une deuxième position, dans laquelle elles sont dégagées de la plaque de catalyseur.

3. Dispositif selon la revendication 2,
**caractérisé** en ce que les plaques de couverture (20) elles-mêmes sont en matériau filtrant perméable aux gaz, essentiellement imperméable aux aérosols, à la graisse et de préférence à la vapeur aussi.

4. Dispositif selon la revendication 2,
**caractérisé** en ce que les plaques de couverture (2) présentent des trous (3), ainsi que, sur leur face interne tournée vers la plaque de catalyseur (1) dans la première position, recouvrant les trous (3), des éléments filtrants (5) en un matériau filtrant perméable aux gaz, essentiellement imperméable aux aérosols et de préférence à la vapeur également.

5. Dispositif selon la revendication 4,
**caractérisé** en ce que, pour les trous, il s'agit de trous poinçonnés ronds ou en forme de fente, qui, sur la face externe des plaques de couverture (2) sont entourés d'une arête d'estampage (3a) de type bourrelet.

6. Dispositif selon l'une des revendications 3 à 5,
**caractérisé** en ce que les plaques de couverture (30) ont une section transversale ondulée et présentent des rangées de trous en forme de fente (33).

7. Dispositif selon l'une des revendications 2 à 6,
**caractérisé** en ce qu'il est prévu un élément filtrant (4,4a) de type bordure en un matériau filtrant perméable aux gaz, essentiellement imperméable aux aérosols et de préférence à la vapeur également, qui, dans la première position des plaques de couverture (2, 20, 30) ferme le bord en face du passage libre du mélange gazeux environnant.

8. Dispositif selon l'une des revendications 3 à 7,
**caractérisé** en ce que les éléments filtrants (4,4a,5) se composent de deux couches de matériaux filtrants perméables aux gaz, dont l'une est essentiellement imperméable aux aérosols et dont l'autre arrête la vapeur.

9. Dispositif selon l'une des revendications 2 à 8,
**caractérisé** en ce que les plaques de couverture (2, 20,30) sont, sur leur face opposée aux points d'articulation sur la plaque de catalyseur (1), reliées au moyen d'un dispositif de retenue (10), qui s'ouvre à la température prédéterminée et qui présente entre les plaques de couverture (2) ou entre chaque plaque de couverture (2) et la plaque de catalyseur (1) des moyens de précontrainte (107), grâce auxquels les plaques de couverture (2) sont, lors de l'ouverture, déplacées dans la deuxième position.

10. Dispositif selon la revendication 6,**caractérisé** en ce que les ondulations des deux plaques de couverture (30) sont essentiellement décalées les unes par rapport aux autres d'une demi-période d'ondulation.

11. Dispositif selon l'une des revendications 2 à 10,
**caractérisé** en ce que le matériau filtrant est imprégné de résine échangeuse d'ions.
